# EUROPÄISCHE PATENTSCHRIFT

(11) **EP 4 384 344 B1**
(45) Veröffentlichungstag und Bekanntmachung des Hinweises auf die Patenterteilung: **10.09.2025**
(21) Anmeldenummer: 22747296.6
(22) Anmeldetag: 06.07.2022
(51) Int. Cl.: B23P 19/06, B23P 19/04, B21D 37/16, B21D 39/03, B21J 15/02, B21J 15/08, F16B 5/04, F16B 37/06, B21K 25/00, B21J 15/10, B21J 15/28

(54) **FÜGEWERKZEUGEINHEIT**
JOINING TOOL UNIT
UNITÉ D'OUTIL D'ASSEMBLAGE

(30) Priorität: 13.08.2021 DE 102021121090
(43) Veröffentlichungstag der Anmeldung: 19.06.2024
(73) Patentinhaber: TOX PRESSOTECHNIK GmbH & Co. KG, 88250 Weingarten (DE)
(72) Erfinder: BADENT, Michael, 88250 Weingarten (DE); PFEIFFER, Wolfgang, 88709 Hagnau (DE); MATZKE, Marcus, 88214 Ravensburg (DE)
(74) Vertreter: RavensPAT Patentanwälte Partnerschaft mbB
(86) Internationale Anmeldenummer: PCT/EP2022/068682
(87) Internationale Veröffentlichungsnummer: WO 2023/016708

(56) Entgegenhaltungen:
- DE-A1- 102010 006 400
- DE-A1- 102018 202 140
- US-A1- 2018 250 734
- US-A1- 2021 178 457

## Beschreibung

### Stand der Technik

Eine Fügewerkzeugeinheit, insbesondere eine Fügewerkzeugeinheit zum Clinchen, ist bereits bekannt. Beispielsweise ist aus der US 2018/0250734 A1, der US 2021/0178457 A1 oder der DE 10 2018 202 140 A1 eine Fügewerkzeugeinheit bekannt, bei welcher mittels Laserstrahlwärmeeintrag eine zu fügende Stelle eines Werkstücks erwärmt wird, um das Werkstück an dieser erwärmten Stelle im erwärmten Zustand mit der Fügewerkzeugeinheit zu fügen.

Nachteilig an diesen bekannten Fügewerkzeugeinheiten ist, dass die Fügewerkzeugeinheit vergleichsweise lange Fügezykluszeiten aufweist. Ebenfalls ist nachteilig bekannt, dass aufgrund des Lasereinsatzes ein Strahlungsschutz von Mitarbeitern gewährleistet werden muss, welche mit der Fügewerkzeugeinheit arbeiten oder sich im Bereich der Fügewerkzeugeinheit aufhalten können. Bei der bekannten Fügewerkzeugeinheit wird hierzu die komplette Fügewerkzeugeinheit mit einer Umhausung versehen, welche für Licht des Laserstrahls lichtdicht ausgebildet ist. Hierdurch ist die bekannte Fügewerkzeugeinheit vergleichsweise teuer und aufwendig ausgebildet.

### Aufgabe und Vorteile der Erfindung

Der Erfindung liegt die Aufgabe zugrunde eine verbesserte Fügewerkzeugeinheit bereitzustellen. Insbesondere liegt der Erfindung die Aufgabe zugrunde eine verbesserte Fügewerkzeugeinheit bereitzustellen, mittels welcher ein thermisch unterstütztes Fügeverfahren realisierbar ist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Fügewerkzeugeinheit aus, wobei die Fügewerkzeugeinheit einen Niederhalter, ein bewegbares Werkzeug, ein Werkzeuggegenelement, eine Antriebseinheit, eine Lichtquelle und eine Kontrolleinheit aufweist, wobei der Niederhalter und das bewegbare Werkzeug gegenüberliegend zum Werkzeuggegenelement vorhanden sind, wobei durch die Antriebseinheit der Niederhalter in Richtung Werkzeuggegenelement bewegbar ist, wobei die Fügewerkzeugeinheit ausgebildet ist, ein an die Fügewerkzeugeinheit angeordnetes Werkstück durch eine Bewegung des bewegbaren Werkzeugs relativ zum Werkzeuggegenelement zu fügen, wobei die Kontrolleinheit dazu ausgebildet ist, die Antriebseinheit zu steuern und/oder zu regeln, wobei die Kontrolleinheit dazu ausgebildet ist, die Lichtquelle zu steuern und/oder zu regeln, wobei die Fügewerkzeugeinheit ausgebildet ist, den Niederhalter bis zu einer Position in Richtung Werkzeuggegenelement zu bewegen, an welcher der Niederhalter und das Werkzeuggegenelement das an die Fügewerkzeugeinheit angeordnete Werkstück berühren, wobei die Fügewerkzeugeinheit ausgebildet ist, eine Bestrahlung oder Beleuchtung einer Fügestelle des Werkstücks mit dem Licht der Lichtquelle zu beginnen, wenn der Niederhalter die Position erreicht hat. Hierdurch ist eine vergleichsweise kurze Fügezykluszeit realisierbar. Ebenfalls ist hierdurch die Fügewerkzeugeinheit vergleichsweise kostengünstig ausgebildet.

Beispielsweise umfasst ein Werkstück zwei oder mehr Werkstückteile, welche mittels der Fügewerkzeugeinheit miteinander gefügt werden können. Die Fügewerkzeugeinheit ist beispielsweise zum Setzen eines Funktionselements zum Beispiel zum Setzen einer Stanzmutter, einer Nietmutter, einer Einpressmutter, eines Bolzens, eines Schraubelements am Werkstück und/oder zum Clinchen bzw. Durchsetzfügen und/oder zum Setzen eines Niets wie z.B. einem Clinchniet, Vollstanzniet oder einem Halbhohlstanzniet ausgebildet. Ein Funktionselement ist mit der Fügewerkzeugeinheit z.B. in das Werkstück einnietbar, einpressbar, einstanzbar oder einclinchbar. Mit der Fügewerkzeugeinheit sind z.B. mehrere Werkstückteile des Werkstücks miteinander verbindbar, zum Beispiel mit einem Verbindungselement wie einem Niet oder ohne ein Verbindungselement z.B. mit einem Clinchvorgang.

Denkbar ist, dass das Werkstück auch aus genau einem Werkstückteil besteht. Beispielsweise wird in einem Fügevorgang am Werkstück ein Funktionselement befestigt. Beispielsweise wird in einem Fügevorgang am einzigen Werkstückteil des Werkstücks ein Funktionselement befestigt.

Beispielsweise sind zwischen dem bewegbaren Werkzeug und dem Werkzeuggegenelement zwei oder mehr Werkstückteile anordenbar, welche durch die Fügewerkzeugeinheit in einem Fügevorgang mittels einer Fügeverbindung miteinander verbunden werden. Die Werkstückteile können aus unterschiedlichen Materialien ausgebildet sein. Beispielsweise können die Werkstückteile unterschiedliche Metallzusammensetzungen oder unterschiedliche Materialhärten aufweisen. Bevorzugterweise ist das Werkstückteil, an welchem das bewegbare Werkzeug bei einem Fügevorgang anliegt, härter und/oder spröder als das weitere Werkstückteil des Werkstücks.

Beispielsweise ist die Fügewerkzeugeinheit derart ausgebildet, dass das Werkstückteil, an welchem das bewegbare Werkzeug angreift, durch ein Licht der Lichtquelle erwärmbar ist. Aufgrund der Möglichkeit einer Erwärmung des zu fügenden Werkstücks durch die Fügewerkzeugeinheit ist es möglich, eine Fügeverbindung zwischen einem harten und/oder spröder Werkstückteil und einem Werkstückteil aus einem anderen, z.B. weicheren Material herzustellen. Aufgrund der Möglichkeit der Erwärmung des zu fügenden Werkstücks durch die Fügewerkzeugeinheit ist eine Verbesserung bereits möglicher bzw. heute bekannter Verbindungsanwendung realisierbar.

Beispielsweise ist das bewegbare Werkzeug entlang einer Bewegungsachse der Fügewerkzeugeinheit bewegbar vorhanden. Zum Beispiel ist das bewegbare Werkzeug ausschließlich linear entlang der Bewegungsachse der Fügewerkzeugeinheit bewegbar vorhanden. Beispielsweise umfasst die Antriebseinheit einen Linearantrieb, wie z.B. eine pneumo-hydraulische, hydraulische, pneumatische und/oder elektrische Antriebseinheit.

Beispielsweise ist das bewegbare Werkzeug als eine Matrizeneinheit oder als eine Stempeleinheit ausgebildet. Beispielsweise ist das Werkzeuggegenelement als eine Matrizeneinheit oder als eine Stempeleinheit ausgebildet. Vorstellbar ist, dass das bewegbare Werkzeug als eine Stempeleinheit ausgebildet ist und das Werkzeuggegenelement als eine Matrizeneinheit, oder umgekehrt. Vorstellbar ist auch, dass die Fügewerkzeugeinheit zwei bewegbare Werkzeuge aufweist, wobei die bewegbaren Werkzeuge sich gegenüberliegend an der Fügewerkzeugeinheit vorhanden sind.

Beispielsweise ist die Fügewerkzeugeinheit ausgebildet, im angeordneten Zustand eines Werkstücks an der Fügewerkzeugeinheit das Werkstück durch eine Bewegung des bewegbaren Werkzeugs in Richtung des Werkzeuggegenelements zu fügen.

Zum Beispiel weist das bewegbare Werkzeug und/oder das Werkzeuggegenelement eine Fügefläche auf. Beispielsweise wird ein an der Fügewerkzeugeinheit angeordnetes Werkstück mittels der Fügefläche an der Fügestelle gefügt, d.h. die Fügewerkzeugeinheit ist während des Fügevorgangs über die Fügefläche mit dem Werkstück in unmittelbarem Kontakt.

Denkbar ist, dass die Fügewerkzeugeinheit derart vorhanden ist, dass im angeordneten Zustand eines Werkstücks an der Fügewerkzeugeinheit das bewegbare Werkzeug, z.B. die Fügefläche des bewegbaren Werkzeugs, vor dem Start einer Relativbewegung des bewegbaren Werkzeugs relativ zum Werkzeuggegenelement, einen Abstand zwischen 2cm und 20cm, zwischen 2cm und 15cm oder zwischen 2cm und 10cm zur zu fügenden Stelle des Werkstücks aufweist. Beispielsweise ist das bewegbare Werkzeug, z.B. die Fügefläche des bewegbaren Werkzeugs, vor dem Start einer Relativbewegung des bewegbaren Werkzeugs relativ zum Werkzeuggegenelement, 2cm, 2,5cm, 3cm, 3,5cm, 4cm, 4,5cm, 5cm, 6cm, 7cm, 8cm, 9cm, 10cm, 15cm oder 20cm von der zu fügenden Stelle des Werkstücks beabstandet. Beispielsweise ist der Abstand die Distanz zwischen Fügefläche des bewegbaren Werkzeugs und Kontaktfläche des Werkstücks, wobei die Kontaktfläche des Werkstücks die Stelle ist, an welcher die Fügefläche des bewegbaren Werkzeugs im Fügevorgang angreift.

Eine insbesondere maximale Bewegungsgeschwindigkeit des bewegbaren Werkzeugs relativ zum Werkzeuggegenelement beträgt zwischen 0,1 m/s und 2 m/s, z.B. zwischen 1m/s und 2m/s. Eine insbesondere maximale Bewegungsgeschwindigkeit des bewegbaren Werkzeugs relativ zum Werkzeuggegenelement beträgt 0,1m/s, 0,5m/s, 0,8m/s, 1m/s, 1,1m/s, 1,2m/s, 1,3m/s, 1,4m/s, 1,5m/s, 1,6m/s, 1,7m/s, 1,8m/s, 1,9m/s oder 2m/s.

Beispielsweise ist die Lichtquelle als ein Laser ausgebildet. Denkbar ist, dass der Laser in einem gepulsten und/oder in einem kontinuierlichen Laserbetrieb betrieben werden kann. Beispielsweise ist eine Wellenlänge der Lichtquelle auf ein Absorptionsmaximum des zu bearbeitenden Materials des Werkstücks abgestimmt, sodass ein möglichst energieeffizienter Wärmeeintrag in das Werkstück durch das Licht der Lichtquelle realisiert ist.

Erfindungsgemäß weist der Niederhalter ein Lichtleitungssystem auf. Hierdurch ist die Fügewerkzeugeinheit vergleichsweise vereinfacht, insbesondere vergleichsweise kostengünstig vorhanden. Beispielsweise ist hierdurch eine Fügewerkzeugeinheit realisierbar, welche für einen Strahlenschutz eines Mitarbeiters keine zusätzliche Umhausung benötigt.

Beispielsweise hüllt das Lichtleitungssystem das Licht der Lichtquelle entlang eines Lichtstrahls des Lichts ein, sodass das Licht in radialer Richtung zum Lichtstrahl nach außen durch das Lichtleitungssystem lichtdicht abgeschirmt ist. Beispielsweise schirmt das Lichtleitungssystem des Niederhalters das Licht entlang seines Lichtstrahls nach außen lichtdicht ab.

Denkbar ist auch, dass das Lichtleitungssystem am Werkzeuggegenelement ausgebildet ist. Zum Beispiel sind der Niederhalter und das Werkzeuggegenelement sich gegenüberliegend an der Fügewerkzeugeinheit vorhanden.

Beispielsweise ist eine Stempeleinheit vorhanden, welche den Niederhalter und das bewegbare Werkzeug umfasst. Zum Beispiel ist der Niederhalter als ein Stempel-Niederhalter und das bewegbare Werkzeug als ein Stempelwerkzeug ausgebildet. Beispielsweise ist das Werkzeuggegenelement als eine Matrizeneinheit vorhanden.

Denkbar ist auch, dass eine Matrizeneinheit vorhanden ist, welche den Niederhalter und das bewegbare Werkzeug umfasst. Zum Beispiel ist der Niederhalter als ein Matrizen-Niederhalter und das bewegbare Werkzeug als eine Matrize ausgebildet. Beispielsweise ist das Werkzeuggegenelement als eine Stempeleinheit vorhanden.

Vorstellbar ist, dass die Fügewerkzeugeinheit die Stempeleinheit und/oder die Matrizeneinheit umfasst.

Beispielsweise ist der Niederhalter dazu ausgebildet, eine Niederhaltefunktion bereitzustellen. Beispielsweise ist der Niederhalter relativ zum Werkzeuggegenelement bewegbar vorhanden, sodass ein Abstand zwischen Niederhalter und Werkzeuggegenelement veränderbar ist. Beispielsweise ist eine Relativbewegung von Niederhalter und Werkzeuggegenelement durch die Antriebseinheit realisiert.

Das Lichtleitungssystem ist vorzugsweise am Niederhalter derart ausgestaltet, dass das Lichtleitungssystem das Licht der Lichtquelle entlang des Lichtstrahls einhüllt, sodass das Licht in radialer Richtung zum Lichtstrahl nach außen durch das Lichtleitungssystem abgeschirmt ist.

Beispielsweise ist am Niederhalter eine Ausnehmung des Lichtleitungssystems vorhanden, insbesondere eine zylindrische Ausnehmung, wobei entlang einer Zylinderachse der Ausnehmung, z.B. der Längserstreckung der Ausnehmung, das Licht in Richtung des Werkstücks geleitet werden kann. Die Ausnehmung ist beispielsweise als eine Bohrung, z.B. als eine Durchgangsbohrung, am Niederhalter vorhanden. Denkbar ist auch, dass die Ausnehmung röhrenartig, z.B. in Form einer Röhre, am Niederhalter vorhanden ist. Denkbar ist jedoch auch, dass das Lichtleitungssystem eine Glasfaser aufweist und die Glasfaser am Niederhalter festgelegt ist.

Ebenfalls wird vorgeschlagen, dass das Lichtleitungssystem derart am Niederhalter vorhanden ist, dass ein Lichtstrahl des Lichts der Lichtquelle ausschließlich in einem Winkel größer 0° zu einer Bewegungsachse des bewegbaren Werkzeugs auf die Fügestelle einstrahlt.

Bevorzugterweise ist das Lichtleitungssystem derart ausgestaltet, dass der Lichtstrahl des Lichts der Lichtquelle ausschließlich in einem Winkelbereich zwischen 5° bis 40° relativ zu einer Bewegungsachse des bewegbaren Werkzeugs auf die Fügestelle des Werkstücks einstrahlt. Beispielsweise ist eine Längsachse der Ausnehmung in einem Winkelbereich zwischen 5° bis 40° relativ zur Bewegungsachse des bewegbaren Werkzeugs an dem Niederhalter vorhanden.

Beispielsweise ist eine weitere, z.B. eine zweite Ausnehmung am Niederhalter vorhanden. Denkbar ist, dass die zweite Ausnehmung spiegelsymmetrisch zur ersten Ausnehmung am Niederhalter vorhanden ist. Bevorzugterweise verläuft die Spiegelachse parallel zu der Bewegungsachse des bewegbaren Werkzeugs. Verläuft beispielsweise die Bewegungsachse des bewegbaren Werkzeugs mittig durch den Niederhalter entspricht vorzugsweise die Bewegungsachse der Spiegelachse.

Beispielsweise sind die erste und die zweite Ausnehmung derart am Niederhalter ausgebildet, dass das Licht der Lichtquelle entlang der erste Ausnehmung auf das Werkstück geleitet wird, wenn der Niederhalter am Werkstück ansteht und dass das vom Werkstück reflektierte Licht der Lichtquelle entlang der zweiten Ausnehmung geleitet wird. Durch die Führung des Lichtstrahls entlang der ersten und der zweiten Ausnehmungen im Niederhalter kann auf eine Schutzkabine verzichtet werden.

Erfindungsgemäß umfasst der Niederhalter eine Strahlenfalle oder ein Strahlensumpf, in welchem das reflektierte Licht eingefangen und absorbiert wird.

Denkbar ist weiterhin, dass das Lichtleitungssystem einen Shutter aufweist. Beispielsweise ist eine Beleuchtung einer Fügestelle durch das Licht der Lichtquelle mittels des Shutters aktivierbar oder deaktivierbar. Zum Beispiel ist der Shutter als ein optischer Verschluss, z.B. in Form eines mechanischen und/oder elektronischen Verschluss, z.B. als ein bewegliches Element, vorhanden. Beispielsweise ist der Shutter mittels der Kontrolleinheit ansteuerbar.

Außerdem wird vorgeschlagen, dass der Niederhalter durch die Antriebseinheit in Richtung des Werkzeuggegenelements bewegbar ist. Hierdurch ist ein vergleichsweise kompakter Aufbau der Fügewerkzeugeinheit realisiert.

Beispielsweise ist die Kontrolleinheit dazu ausgebildet, den Niederhalter, insbesondere durch die Antriebseinheit, in Richtung Werkzeuggegenelement zu bewegen, bis der Niederhalter das an der Fügewerkzeugeinheit angeordnete Werkstück berührt.

Beispielsweise ist der Niederhalter relativ zum Werkzeuggegenelement bewegbar vorhanden. Zum Beispiel sind der Niederhalter und das bewegbare Werkzeug durch die Antriebseinheit unabhängig voneinander bewegbar vorhanden. Der Niederhalter ist beispielsweise durch die Antriebseinheit in Richtung des Werkzeuggegenelements bewegbar. Denkbar ist, dass der Niederhalter und das Werkzeuggegenelement durch die Antriebseinheit relativ zueinander bewegbar vorhanden sind. Beispielsweise kann die Antriebseinheit den Niederhalter und/oder das Werkzeuggegenelement bewegen.

Beispielsweise sind der Niederhalter und das Werkzeuggegenelement aufeinander zu bewegbar, sodass ein angeordnetes Werkstück zwischen dem Niederhalter und dem Werkzeuggegenelement klemmbar ist. Beispielsweise ist hierdurch zum einen ein Werkstück für einen Fügevorgang festlegbar, zum anderen sind hierdurch auch Werkstückteile des Werkstücks aneinander klemmbar, sodass ein Wärmeübertrag von einem Werkstückteil zu einem anderen Werkstückteil des Werkstücks verbessert ist. Denkbar ist auch, dass durch einen an das Werkstück anstehenden Zustand des Niederhalters ein Bereich zwischen Niederhalter und Werkstück geschlossen ist, sodass hierdurch eine Lichtabschirmung des Lichts realisiert ist.

Eine insbesondere maximale Bewegungsgeschwindigkeit des Niederhalters relativ zum Werkzeuggegenelement beträgt zwischen 0,1 m/s und 2 m/s, z.B. zwischen 1m/s und 2m/s. Eine insbesondere maximale Bewegungsgeschwindigkeit des Niederhalters relativ zum Werkzeuggegenelement beträgt 0,1m/s, 0,5m/s, 0,8m/s, 1m/s, 1,1m/s, 1,2m/s, 1,3m/s, 1,4m/s, 1,5m/s, 1,6m/s, 1,7m/s, 1,8m/s, 1,9m/s oder 2m/s.

Beispielsweise sind der Niederhalter, das Lichtleitungssystem und/oder die Lichtquelle derart zueinander oder aneinander angeordnet, dass der Niederhalter, das Lichtleitungssystem und/oder die Lichtquelle ausschließlich gemeinsam bewegbar vorhanden sind. Zum Beispiel sind der Niederhalter, das Lichtleitungssystem und/oder die Lichtquelle positionsfest zueinander vorhanden.

Vorstellbar ist weiterhin, dass der Niederhalter eine Abstreiferfunktion aufweist. Beispielsweise wird das bewegbare Werkzeug nach Beendigung des Fügevorgangs des Werkstücks relativ zum Werkzeuggegenelement vom Werkstück weg bewegt. Hierbei ist es denkbar, dass das Werkstück am bewegbaren Werkzeug haften bleibt, wobei der Niederhalter in diesem Fall beispielsweise relativ zum Werkzeuggegenelement in seiner am Werkstück anstehenden Position verbleibt, sodass das Werkstück aufgrund seines zwischen dem Niederhalter und dem Werkzeuggegenelement geklemmten Zustands positionsfest verbleibt und damit vom bewegbaren Werkzeug abgestreift wird.

Weiter wird vorgeschlagen, dass die Kontrolleinheit der Fügewerkzeugeinheit dazu ausgebildet ist, zeitgleich mit dem Start der Bewegung des bewegbaren Werkzeugs oder zeitlich nach dem Start der Bewegung des bewegbaren Werkzeugs eine Bestrahlung oder eine Beleuchtung der Fügestelle des angeordneten Werkstücks mit dem Licht der Lichtquelle zu beenden. Hierdurch ist eine Fügezykluszeit vergleichsweise verkürzt.

Beispielsweise ist die Kontrolleinheit dazu ausgebildet, zeitgleich mit dem Start der Bewegung des bewegbaren Werkzeugs oder zeitlich nach dem Start der Bewegung des bewegbaren Werkzeugs die Lichtquelle auszuschalten und damit eine Bestrahlung oder Beleuchtung der Fügestelle des angeordneten Werkstücks mit dem Licht der Lichtquelle zu beenden. Denkbar ist auch, dass die Kontrolleinheit dazu ausgebildet ist, eine Bestrahlung oder Beleuchtung der Fügestelle des angeordneten Werkstücks mit dem Licht der Lichtquelle zu beenden und anschließend eine Bewegung des bewegbaren Werkzeugs zu starten.

Beispielsweise ist bezogen auf einen Fügevorgang des Werkstücks durch die Fügewerkzeugeinheit die Fügewerkzeugeinheit ausgebildet, dass eine Bewegung des bewegbaren Werkzeugs in Richtung Werkzeuggegenelement gestartet wird und zeitgleich oder zeitlich danach eine Bestrahlung oder Beleuchtung der Fügestelle mit dem Licht der Lichtquelle beendet wird. Denkbar ist ebenfalls, dass bezogen auf einen Fügevorgang des Werkstücks durch die Fügewerkzeugeinheit die Fügewerkzeugeinheit ausgebildet ist, nach der Beendigung der Bestrahlung oder der Beleuchtung der Fügestelle mit dem Licht innerhalb einem zeitlichen Intervall eine Bewegung des bewegbaren Werkzeugs zu starten. Beispielsweise ist das Intervall zwischen 0 Millisekunden (ms) und 100ms, z.B. zwischen 0ms und 50ms, z.B. zwischen 0ms und 40ms oder z.B. zwischen 0ms und 30ms groß.

Vorstellbar ist weiterhin, dass die Fügewerkzeugeinheit eine Sensoreinheit aufweist, wobei die Fügewerkzeugeinheit dazu ausgebildet ist, mittels der Sensoreinheit zu detektieren, ob der Niederhalter in der Position am Werkstück ansteht. Die Sensoreinheit umfasst hierzu beispielsweise einen Drucksensor, welcher einen Staudruck im Inneren des Niederhalters detektiert.

Beispielsweise ist die Sensoreinheit dazu ausgebildet, zu ermitteln, ob der Niederhalter an der Position am Werkstück derart ansteht, dass der Niederhalter mit dem Werkstück Licht der Lichtquelle nach Außen in einer Weise lichtdicht abschirmt, dass eine Gefährdung eines Mitarbeiters im Umgebungsbereich der Fügewerkzeugeinheit ausgeschlossen werden kann. Zum Beispiel detektiert die Sensoreinheit dabei mit einem Drucksensor einen Staudruck zwischen Niederhalter und Werkstück.

Beispielsweise prüft die Fügewerkzeugeinheit, insbesondere prüft die Kontrolleinheit, ob ein Sensorwert der Sensoreinheit in einem vorgegebenen Sollbereich sich befindet, bevor eine Bestrahlung oder Beleuchtung der Fügestelle des angeordneten Werkstücks mit dem Licht der Lichtquelle gestartet wird und/oder bevor eine Bewegung des bewegbaren Werkzeugs gestartet wird. Befindet sich der Sensorwert nicht in dem vorgegebenen Sollbereich blockiert die Fügewerkzeugeinheit, insbesondere blockiert die Kontrolleinheit, einen Start einer Bestrahlung oder Beleuchtung der Fügestelle des angeordneten Werkstücks mit dem Licht der Lichtquelle und/oder einen Start einer Bewegung des bewegbaren Werkzeugs.

In einer bevorzugten Ausführungsform ist die Kontrolleinheit der Fügewerkzeugeinheit derart ausgebildet, dass eine Bestrahlung oder Beleuchtung der Fügestelle des angeordneten Werkstücks mit dem Licht der Lichtquelle beendet ist, bevor das bewegbare Werkzeug in einen Lichtstrahl des Lichts der Lichtquelle bei seiner Bewegung in Richtung des Werkzeuggegenelements eintreten kann. Beispielsweise schaltet die Kontrolleinheit kurz vor dem Eintritt des bewegbaren Werkzeugs in den Lichtstrahl des Lichts der Lichtquelle eine Bestrahlung oder Beleuchtung der Fügestelle des angeordneten Werkstücks mit dem Licht der Lichtquelle ab. Hierdurch wird eine Erwärmung des bewegbaren Werkzeugs und damit eine Beschädigung des bewegbaren Werkzeugs verhindert.

In einer beispielhaften Modifikation der Fügewerkzeugeinheit ist die Fügewerkzeugeinheit dazu ausgebildet, in einem ersten Schritt den Niederhalter bis zu einer Position in Richtung Werkzeuggegenelement zu bewegen, in einem zweiten Schritt eine Beleuchtung oder eine Bestrahlung der Fügestelle durch die Lichtquelle zu starten, in einem dritten Schritt die Bewegung des bewegbaren Werkzeugs zu starten, in einem vierten Schritt die Beleuchtung oder die Bestrahlung zu beenden und in einem fünften Schritt den Niederhalter aus der Position relativ zum Werkzeuggegenelement weg zu bewegen. Hierdurch ist ein vergleichsweise sicherer Fügeprozess realisierbar, insbesondere im Hinblick auf einen Strahlschutz eines Mitarbeiters. Ein Abheben des Niederhalters vom Werkstück erfolgt im Betrieb der Fügewerkzeugeinheit vorzugsweise erst dann, wenn sichergestellt ist, dass die Lichtquelle wie zum Beispiel der Laser abgeschaltet bzw. deaktiviert ist.

Beispielsweise werden die Schritte eins bis fünf nacheinander ausgeführt. Zum Beispiel ist die Fügewerkzeugeinheit im ersten Schritt dazu ausgebildet, den Niederhalter in Richtung Werkzeuggegenelement in eine Position zu bewegen und ihn in der Position zu halten, die Schritte zwei, drei und vier auszuführen und anschließend den Niederhalter aus der Position zurück zu bewegen. Beispielsweise ist der Niederhalter in der Position in Kontakt oder in Berührung mit einer Oberfläche des Werkstücks, im angeordneten Zustand des Werkstücks an der Fügewerkzeugeinheit. Beispielsweise ist die Kontrolleinheit dazu ausgebildet, die oben genannten Verfahrensschritte zu regeln und/oder zu steuern. Zum Beispiel ist die Fügewerkzeugeinheit dazu ausgebildet, dass eine Bewegung des bewegbaren Werkzeugs in Richtung Werkzeuggegenelement zeitgleich oder zeitlich nach einer Berührung oder eines Kontakts des Niederhalters mit dem Werkstück gestartet wird.

Ebenfalls wird vorgeschlagen, dass der Niederhalter derart ausgebildet ist, dass im angeordneten Zustand eines Werkstücks an der Fügewerkzeugeinheit der Niederhalter in der Position derart an der Oberfläche des Werkstücks anstehend angeordnet ist, dass der Niederhalter die Fügestelle des Werkstücks umschließt, sodass maximal 20% der Strahlungsleistung des Lichts zwischen Niederhalter und Oberfläche des Werkstücks nach außen abstrahlt.

Beispielsweise ist die Fügewerkzeugeinheit derart ausgebildet, dass im angeordneten Zustand eines Werkstücks an der Fügewerkzeugeinheit der Niederhalter in der Position derart an der Oberfläche des Werkstücks anstehend angeordnet ist, dass der Niederhalter die Fügestelle des Werkstücks umschließt, sodass maximal 20% der im unmittelbaren Umgebungsbereich der zu fügenden Stelle des Werkstücks ankommenden Strahlungsleistung des Lichts zwischen Niederhalter und Oberfläche des Werkstücks nach außen abstrahlt.

Beispielsweise ist der Niederhalter derart ausgebildet, dass in der anstehenden Position des Niederhalters am Werkstück 0% bis 30%, 0% bis 20%, 0% bis 25%, 0% bis 15% oder 0% bis 10% der Strahlungsleistung des Lichts zwischen Niederhalter und Oberfläche des Werkstücks nach außen abstrahlt. Beispielsweise ist der Niederhalter derart ausgebildet, dass in der anstehenden Position des Niederhalters am Werkstück maximal 15% oder maximal 10% der Strahlungsleistung des Lichts zwischen Niederhalter und Oberfläche des Werkstücks nach außen abstrahlt.

Beispielsweise umfasst der Niederhalter eine Aussparung. Zum Beispiel befindet sich die Aussparung gegenüberliegend zum Werkzeuggegenelement, sodass die Aussparung im angeordneten Zustand eines Werkstücks an der Fügewerkzeugeinheit und im anstehenden Zustand des Niederhalters am Werkstück sich im Bereich um die Fügestelle des Werkstücks befindet.

Beispielsweise gehen die erste und die zweite Ausnehmung jeweils an einem Ende in die Aussparung über. Zum Beispiel greift das bewegbare Werkzeug beim Fügevorgang in die Aussparung hinein oder durch die Aussparung hindurch. Beispielsweise ist die Aussparung als eine Bohrung am Niederhalter vorhanden.

Beispielsweise ist der Niederhalter derart vorhanden, dass der Niederhalter die Aussparung umschließt, sodass in einem idealen Fall der Niederhalter im anstehenden Zustand am Werkstück zusammen mit dem Werkstück die Aussparung vollständig umschließt.

Beispielsweise ist als Strahlleistung des Lichts der Lichtquelle die Strahlleistung des Lichts anzusehen, welche besteht, wenn das Licht der Lichtquelle in den Bereich der Aussparung eintritt. Beispielsweise ist als Strahlleistung des Lichts der Lichtquelle die Strahlleistung des Lichts anzusehen, welche auf ein an die Fügewerkzeugeinheit angeordnetes Werkstück einwirkt.

Beispielsweise ist die unmittelbar an der Lichtquelle austretende Strahlleistung des Lichts größer als die Strahlleistung des Lichts der Lichtquelle, welche auf ein an die Fügewerkzeugeinheit angeordnetes Werkstück einwirkt, insbesondere aufgrund von Reflexions- und Absorptionsverlusten des Lichts auf seinem Weg von der Lichtquelle bis zur Fügestelle.

Eine beispielhafte Ausführungsform der Erfindung ist eine Werkzeugzange mit einem Werkzeugbügel und einer Fügewerkzeugeinheit nach einer der vorangegangen aufgeführten Ausbildungsformen.

Beispielsweise verbindet der Werkzeugbügel das bewegbare Werkzeug mit dem Werkzeuggegenelement, sodass ein Kraftschluss zwischen dem bewegbaren Werkzeug und dem Werkzeuggegenelement realisiert ist.

Beispielsweise ist die Werkzeugzange als eine Clinch-, Füge- und/oder Prägezange ausgebildet. Denkbar ist auch, dass die Werkzeugzange als eine Halbhohlnietzange und/oder als eine Vollstanznietzange vorhanden ist.

Auch wird ein Fügevorgang eines Werkstücks durch eine Fügewerkzeugeinheit vorgeschlagen, beispielsweise ein Fügevorgang eines Werkstücks durch eine Fügewerkzeugeinheit nach einer der vorgegangen ausgeführten Ausführungsformen, wobei der Fügevorgang die nacheinander folgenden Verfahrensschritte aufweist:
- Anordnen eines zu bearbeitenden Werkstücks an die Fügewerkzeugeinheit
- Bewegen eines Niederhalters der Fügewerkzeugeinheit relativ zu einem Werkzeuggegenelement der Fügewerkzeugeinheit bis zu einer Position, an welcher der Niederhalter und das Werkzeuggegenelement das Werkstück berühren
- Halten des Niederhalters an der Position
- Starten einer Bestrahlung oder einer Beleuchtung einer Fügestelle des Werkstücks mit einem Licht einer Lichtquelle der Fügewerkzeugeinheit, wenn der Niederhalter die Position erreicht hat
- Einfangen und Absorbieren des reflektierten Lichts der Lichtquelle der Fügewerkzeugeinheit mittels einer Strahlenfalle oder eines Strahlensumpfs des Niederhalters der Fügewerkzeugeinheit.

Weiter wird vorgeschlagen, dass der Fügevorgang einen der folgenden weiteren Verfahrensschritte umfassen kann:
- Detektion der Position des Niederhalters durch eine Sensoreinheit der Fügewerkzeugeinheit
- Prüfen durch eine Kontrolleinheit des Fügewerkzeugs, basierend auf der Detektion der Sensoreinheit, ob der Niederhalter die Position erreicht hat
- Starten einer Bewegung eines bewegbaren Werkzeugs der Fügewerkzeugeinheit in Richtung der Fügestelle des Werkstücks, um das Werkstück zu fügen
- Beenden der Beleuchtung oder der Bestrahlung der Fügestelle des Werkstücks zeitgleich mit dem Start der Bewegung des bewegbaren Werkzeugs der Fügewerkzeugeinheit in Richtung der Fügestelle des Werkstücks, zeitlich nach dem Start der Bewegung des bewegbaren Werkzeugs der Fügewerkzeugeinheit in Richtung der Fügestelle des Werkstücks oder zeitlich vor dem Start der Bewegung des bewegbaren Werkzeugs der Fügewerkzeugeinheit in Richtung der Fügestelle des Werkstücks
- Prüfen durch die Fügewerkzeugeinheit, ob beim Fügevorgang des Werkstücks durch das bewegbare Werkzeug die Beleuchtung oder die Bestrahlung der zu fügenden Stelle des Werkstücks beendet ist
- Fügen des Werkstücks durch das bewegbare Werkzeug, bevor der Niederhalter von der Position wegbewegt wird.
- Wegbewegen des Niederhalters von der Position, nachdem eine Bewegung des bewegbaren Werkzeugs in Richtung der zu fügenden Stelle des Werkstücks gestartet wurde
- Prüfen durch die Fügewerkzeugeinheit, ob die Beleuchtung oder die Bestrahlung der zu fügenden Stelle des Werkstücks beendet ist, bevor der Niederhalter von der Position wegbewegt wird.

Hierdurch ist zum einen eine Sicherheitsfunktion bereitgestellt, insbesondere um eine Gefährdung eines Mitarbeiters auszuschließen und zum anderen kann hierdurch eine insbesondere unerwünschte Erwärmung des bewegbaren Werkzeugs kontrolliert werden.

### Figurenbeschreibung

Ein Ausführungsbeispiel wird anhand der nachstehenden Zeichnungen unter Angabe weiterer Einzelheiten und Vorteile näher erläutert.

Es zeigen:
- Fig. 1: eine perspektivische Ansicht von schräg oben auf eine Werkzeugzange mit einer Fügewerkzeugeinheit,
- Fig. 2: eine perspektivische Ansicht eines Teils der Fügewerkzeugeinheit,
- Fig. 3: eine weitere perspektivische Ansicht des Teils der Fügewerkzeugeinheit gemäß Fig. 2,
- Fig. 4: eine Schnittansicht eines Teils der Fügewerkzeugeinheit gemäß Fig. 1, wobei die Fügewerkzeugeinheit mit einem Niederhalter und einem Werkzeuggegenelement an einem Werkstück anliegt und wobei ein Verlauf eines Lichtstrahls angedeutet ist,
- Fig. 5: eine Schnittansicht der Anordnung gemäß Fig. 4, wobei ein Verlauf einer Luftströmung angedeutet ist,
- Fig. 6: eine Schnittansicht eines Teils der Fügewerkzeugeinheit mit Pyrometer,
- Fig. 7: eine Schnittansicht der Anordnung gemäß Fig. 4 und 5, wobei am Werkstück eine Fügeverbindung hergestellt ist,
- Fig. 8: eine Schnittansicht der Anordnung gemäß Fig. 4, 5 und 7 in Ausgangsposition nach der Herstellung der Fügeverbindung.

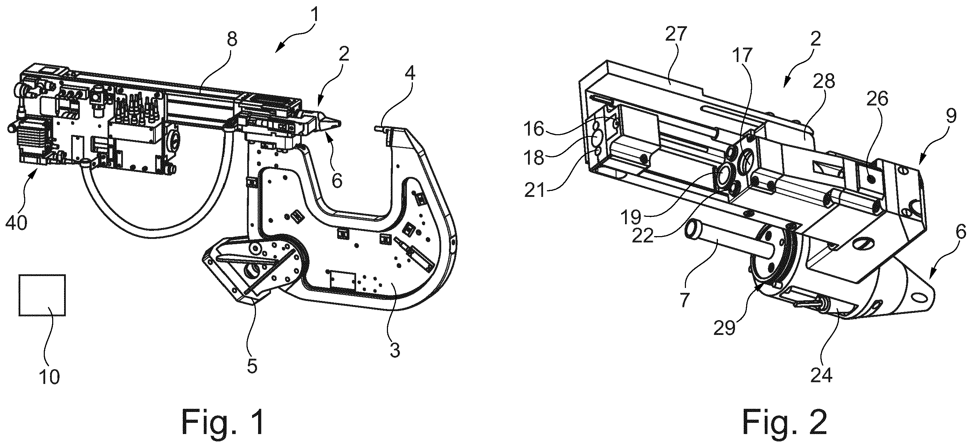

In der Figur 1 ist eine Werkzeugzange 1 mit einer Fügewerkzeugeinheit 2 dargestellt. Die Werkzeugzange 1 weist einen Werkzeugbügel 3 auf, wobei an dem Werkzeugbügel 3 die Fügewerkzeugeinheit 2 angeordnet ist. Der Werkzeugbügel 3 ist vorzugsweise als C-Bügel ausgestaltet und kann beispielsweise über ein Verbindungselement 5 mit einem in der Figur 1 nicht dargestellten Roboterarm befestig werden.

An der Fügewerkzeugeinheit 2 ist ein Werkzeuggegenelement 4, ein Niederhalter 6, ein bewegbares Werkzeug 7 (s. Fig. 2), eine Antriebseinheit 8, eine Lichtquelle 10 und eine Kontrolleinheit 40 ausgebildet.

Die Antriebseinheit 8 kann als ein elektrischer, ein pneumatischer, ein hydraulischer oder ein hydro-pneumatischer Antrieb ausgebildet sein. Die Antriebseinheit 8 ist beispielsweise mit dem Werkzeugbügel 3 verbunden.

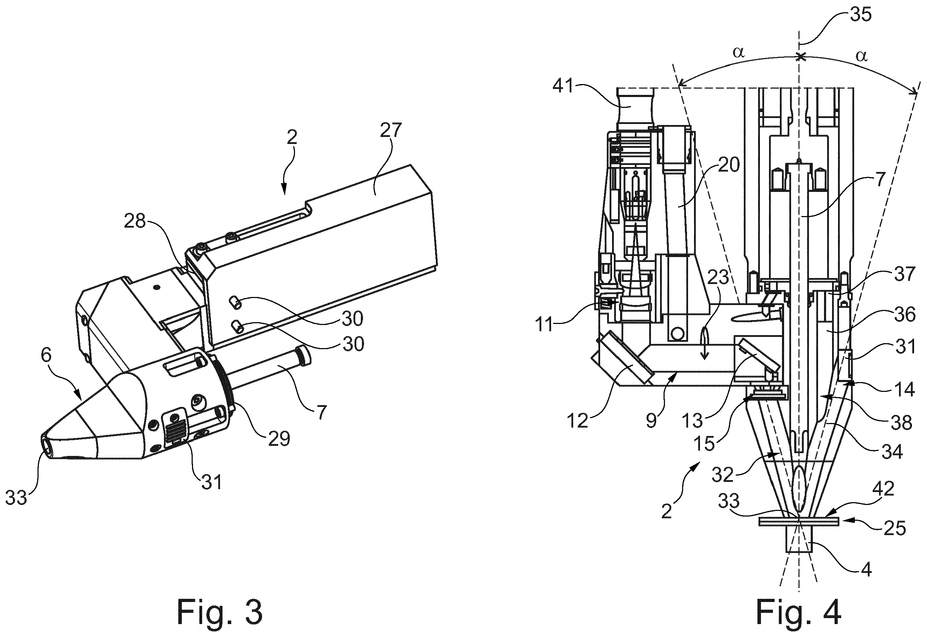

Beispielswiese sind am Niederhalter 6 das bewegbare Werkzeug 7, ein Pyrometer 24 und ein Lichtleitungssystem 9 angeordnet. Das Lichtleitungssystem 9 umfasst einen Kollimator 11, ein ersten Spiegel 12, einen zweiten Spiegel 13, eine Strahlenfalle 14 bzw. Strahlensumpf und einem Schutzglas 15 (s. Fig. 4). Beispielsweise ist die Lichtquelle 10 als ein Laser, insbesondere als ein Faserlaser ausgebildet. Der Kollimator 11 ist vorzugsweise derart ausgestaltet, dass ein kollimierter Lichtstrahl erzeugt wird, zum Beispiel ein kollimierter Laserstrahl erzeugt wird. Beispielsweise werden die Lichtstrahlen der Lichtquelle 10 aufgeweitet und zumindest annähernd parallel zueinander ausgerichtet werden. Der erste Spiegel 12 ist beispielsweise verstellbar, so dass die Position eines Lichtstrahls der Lichtquelle 10 auf einem zu bearbeitenden Werkstücks 25 eingestellt werden kann. Der zweite Spiegel 13 ist vorzugsweise positionsfest an der Fügewerkzeugeinheit 2 angeordnet. Das Schutzglas 15 bildet beispielsweise eine Trennstelle zwischen den Optiken bzw. den Spiegeln 12, 13 und Kollimator 11 des Lichtleitungssystems 9 und dem Niederhalter 6. Weiter kann der Strahlendurchmesser des Lichtstrahls durch ein Verstellelement 26 an der Außenseite Fügewerkzeugeinheit 2 eingestellt werden. Am Ende der Strahlenfalle 14 bzw. des Strahlensumpf ist bevorzugterweise eine Kühlplatte 31 ausgebildet, die die Strahlenfalle 14 bzw. den Strahlensumpf kühlt. Die Kühlplatte 31 ist vorzugsweise an einer Außenseite des Niederhalters 6 lösbar angeordnet, somit kann die Kühlplatte 31 z.B. bei Verschleiß oder Verschmutzung ausgetauscht oder gereinigt werden.

Die Fügewerkzeugeinheit 2 weist vorzugsweise Steckplätze 16, 17 auf, um die Lichtquelle 10 an der Fügewerkzeugeinheit 2 anzukoppeln. Beispielsweise sind an der Fügewerkzeugeinheit auch Steckplätze 18, 19 für eine Absaugleitung 20 und Steckplätze 21, 22 für einen Einlass 23 vorgesehen, damit ein Fluid am Einlass 23 eingeströmt bzw. an der Absaugleitung 20 abgesaugt werden kann. Beispielsweise ist das Fluid als ein Gas, z.B. als Luft, insbesondere als von Partikeln gereinigte Luft, ausgebildet. Beispielsweise ist das Fluid als ein gereinigtes Gas, frei von Partikeln vorhanden. Denkbar ist auch, dass das Fluid als ein spezielles Gas, wie z.B. Stickstoff oder Kohlendioxid vorhanden ist.

Eine standardmäßige Werkzeugzange kann nachträglich mit einem Teil der Fügewerkzeugeinheit 2, insbesondere mit einem Niederhalter 6 und einem Lichtleitungssystem 9 ausgestattet werden, indem der Niederhalter 6 und das Lichtleitungssystem 9 mit einem Antrieb 8, welcher vorzugsweise an einem Werkzeugbügel 3 angeordnet ist, verbunden werden. Dafür weist vorzugsweise die Fügewerkzeugeinheit 2 ein Befestigungselement 27 auf, wobei ein Teil der Fügewerkzeugeinheit 2, insbesondere der Teil der Fügewerkzeugeinheit 2 an dem die Steckplätze 16, 17, 18, 19, 21, 22 ausgebildet sind, durch das Befestigungselement 27 mit dem Antrieb 8 verbunden werden kann. Weiter weist der Niederhalter 6 für die Verbindung mit dem Antrieb 8 ein Anbindungselement 29 auf. Das Befestigungselement 27 ist vorzugsweise aus einem plattenförmigen Material, insbesondere Metall. Das

Befestigungselement 27 kann durch Befestigungsmittel 30, z.B. Schrauben, mit dem Antrieb 8 verbunden werden. An dem Befestigungselement 27 ist beispielsweise ein Sicherheitsschalter 28 angeordnet.

In den Figuren 4, 5, 6, 7, und 8 ist eine Schnittansicht der Fügewerkzeugeinheit 2 dargestellt. Von der Lichtquelle 10 koppelt ein Lichtstrahl der Lichtquelle am Lichtleitungssystem 9 im Bereich 41 ein. Der Verlauf des Lichtstrahls ist in Fig. 4 schematisch durch Pfeile L dargestellt. Der Lichtstrahl gelangt z. B. von der in Fig. 4 nicht dargestellten Lichtquelle zum Bereich 41 und weiter zum Kollimator 11, wobei der Lichtstrahl anschließend beispielsweise am ersten Spiegel 12 und am zweiten Spiegel 13 reflektiert wird und beispielhaft durch das Schutzglas 15 zum Niederhalter 6 gelangt. Am Niederhalter 6 ist eine erste Ausnehmung 32 ausgebildet, wobei die erste Ausnehmung 32 beispielsweise eine Bohrung im Niederhalter 6 ist. Beispielsweise gelangt der Lichtstrahl L durch die erste Ausnehmung 32 zu einer Aussparung 33, welcher an einem werkstückseitigen Ende des Niederhalters 6 ausgebildet ist. Liegt der Niederhalter 6 an einem Werkstück 25 auf, wird der Lichtstrahl L an der vorzugsweise metallenen Werkstückoberfläche 42 des Werkstücks 25 reflektiert und gelangt in eine zweite Ausnehmung 34, welche im Niederhalter 6, z.B. als Bohrung, ausgebildet ist. Am Ende der zweiten Ausnehmung 34 ist die Strahlenfalle 14 bzw. der Strahlensumpf ausgebildet, so dass die vom Werkstück 25 reflektierten Lichtstrahlen in der Strahlenfalle 14 bzw. dem Strahlensumpf aufgenommen und absorbiert werden.

Beispielsweise ist am Niederhalter 6 eine weitere Bohrung für das bewegbare Werkzeug 7 vorgesehen, so dass das bewegbare Werkzeug 7 linear entlang einer Bewegungsachse 35 in Richtung des Werkstücks 25 bewegt werden kann. Die Bewegungsachse 35 verläuft vorzugsweise entlang einer Längserstreckung des bewegbaren Werkzeugs 7. Weiter verläuft die Bewegungsachse 35 beispielsweise mittig durch das bewegbare Werkzeug 7. Eine Längsachse der ersten Ausnehmung 32 bzw. der zweiten Ausnehmung 34 ist beispielsweise in einem Winkelbereich α zwischen 5° bis 40° relativ zur Bewegungsachse 35 des bewegbaren Werkzeugs 7 an dem Niederhalter 6 vorhanden. Bevorzugterweise ist die zweite Ausnehmung 34 spiegelsymmetrisch zur ersten Ausnehmung 32 ausgestaltet, wobei die Bewegungsachse 35 beispielsweise Bestandteil einer Spiegelebene ist.

Beispielsweise bilden Teile des Lichtleitungssystems 8 den Strömungskanal 38. Zum Beispiel bilden die erste und die zweite Ausnehmung 32, 34 des Lichtleitungssystems 8 und die Aussparung 33 einen Teil des Strömungskanals 38. Beispielsweise verläuft der Strömungskanal 38 hauptsächlich entlang des Lichtleitungssystems 8, wobei der Strömungskanal 38 erst nach dem Kollimator 11 anfängt. Weiter weist der Strömungskanal 38 eine weitere, zweite Aussparung 36 auf, die vorzugsweise als Bohrung ausgebildet ist. Beispielsweise schließt die zweite Aussparung 36 an einem Abschnitt der zweiten Ausnehmung 34 an und verläuft parallel zur Bewegungsachse 35 des bewegbaren Werkzeugs 7. Das Fluid gelangt über den Einlass 23 in den Strömungskanal 38 und kann den Strömungskanal 38 entlangströmen. Beispielsweise wird das Fluid im Bereich nach dem Kollimator 11 bis zum Schutzglas 15 gestaut, da das Fluid nur an den Außenseiten des Schutzglases 15 zur ersten Ausnehmung 32 strömen kann. Dadurch wird in dem Bereich nach dem Kollimator 11 bis zum Schutzglas 15 ein Überdruck erzeugt, solange das Fluid durch den Einlass 23 einströmt. Beispielsweise strömt Fluid dauerhaft über den Einlass 23 ein, um die Optiken bzw. die Spiegel 12, 13 sauber zu halten. Das Fluid kann aus dem Strömungskanal 38 durch die Aussparung 33 und einen zweiten Auslass 37 strömen. Der zweite Auslass 37 ist vorzugsweise am Ende der Aussparung 36 angeordnet, wobei der zweite Auslass 37 beispielsweise mit der Absaugleitung 20 verbunden ist, so dass das einströmende Fluid am Ende der Aussparung 36 abgesaugt werden kann. Zum Beispiel ist am Strömungskanal 38 eine Absaugleitung 20 angeordnet, aus welcher das Fluid aus dem Strömungskanal 38 abgesaugt werden kann.

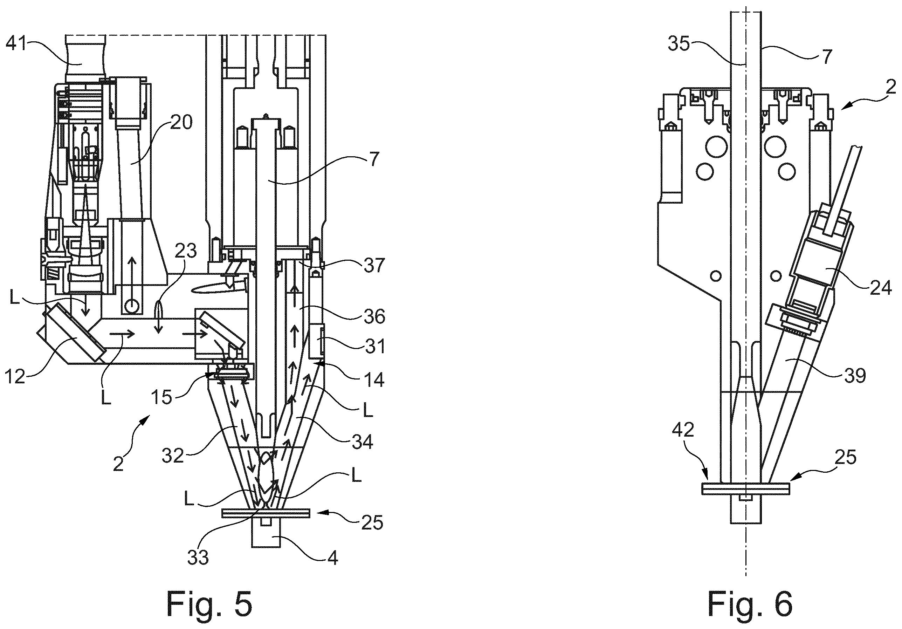

Zum Beispiel wird das Fluid über den kompletten Fügevorgang durch den Einlass 23 in den Strömungskanal 32 eingelassen, wobei das Fluid aus der Aussparung 33 ausströmt, solange der Niederhalter 6 nicht am Werkstück 25 aufliegt. Beispielsweise wird für einen Fügevorgang zuerst die Fügewerkzeugeinheit 2 in Richtung des zu bearbeitenden Werkstücks 25 bewegt bis der Niederhalter 6 und das Werkstückgegenelement 4 am Werkstück anliegen. Sobald der Niederhalter 6 am Werkstück 25 aufliegt bewegt der Antrieb 8 das bewegbare Werkzeug 7 entlang der Bewegungsachse 35 in Richtung des Werkstücks 25 in eine Startposition gemäß Figur 5. Dies stellt eine Ausgangsposition des bewegbaren Werkzeugs 7 dar. Hierdurch ist ein Abstand zwischen bewegbaren Werkzeug 7 und Werkstück 25 minimiert, sodass das bewegbare Werkzeug 7 eine vergleichsweise kurze Wegstrecke zum Werkstück 25 aufweist.

Beispielsweise wird durch die Bewegung des bewegbaren Werkzeugs 7 durch den Antrieb 8 ein Federelement geladen, wodurch der Niederhalter 6 mit einer Kraft des Federelements gegen das Werkstück 25 gedrückt wird. Dadurch wird der Niederhalter 6 insbesondere fest an das Werkstück 25 gedrückt, wodurch ein Austreten von Licht zwischen Niederhalter 6 und Werkstück 25 verhindert werden soll. Weiter kann durch die hohe Anpresskraft des Niederhalters 6 auf das am Niederhalter 6 anliegenden Werkstücks 25 Wärme von einem ersten Werkstückteil des Werkstücks 25, welches in Kontakt mit dem Niederhalter ist, auf ein zweites Werkstücksteil des Werkstück 25, welches am Werkzeuggegenelement 4 anliegt, verbessert übertragen werden.

Beispielsweise erfolgt anschließend eine Überprüfung, ob der Niederhalter 6 wie gewünscht am Werkstück 25 anliegt. Beispielsweise wird dafür durch die Kontrolleinheit 40 zunächst die Position des bewegbaren Werkzeugs 7 bestimmt. Beispielsweise wird außerdem die Position des Sicherheitsschalters 28 ermittelt, und damit die Position des Niederhalters und des Lichtleitungssystems 9 überprüft. Zum Beispiel wird, nachdem beide Prüfungen die gewünschten Ergebnisse liefern und als richtig identifiziert wurden, der Druck innerhalb des Strömungskanals 38 bestimmt.

Beispielsweise wird zur Druckbestimmung der zweite Auslass 37 bzw. ein Ventil zur Pumpe an der Absaugleitung 20 geschlossen (s. Fig. 4). Dadurch staut sich das Fluid innerhalb des Strömungskanals 38, wenn die Aussparung 33 am Niederhalter 6 durch das Werkstück 25 abgedeckt ist und wenn der Strömungskanal 38 bzw. das Lichtleitungssystem 9 keine Beschädigungen aufweist. Zum Beispiel wird der Druck im Strömungskanal 38 durch einen Sensor (nicht dargestellt) gemessen. Der durch den Sensor gemessene Druck wird zur Kontrolleinheit 40 kommuniziert, wobei die Kontrolleinheit 40 den vom Sensor gemessenen Druck mit einem vorgegebenem Schwellenwert vergleicht. Der Schwellenwert ist vorzugsweise derart gewählt, dass selbst bei einem schmalen Spalt zwischen dem Niederhalter 6 und dem Werkstück 25 der durch den Sensor gemessene Druck im Strömungskanal 38 den Schwellenwert nicht überschreiten kann. Damit ist gewährleistet, dass nur bei einem gewünschten, z.B. senkrechten, Aufliegen des Niederhalters 6 am Werkstück 25 die Lichtquelle 10 aktivierbar ist, so dass keine Lichtstrahlung nach außen austritt.

Beispielsweise wird nach Überprüfung des Drucks im Strömungskanal 3 der zweite Auslass und/oder ein Ventil zur Pumpe der Absaugleitung geöffnet, so dass eine Strömung im Strömungskanal 38 wieder aufgebaut wird (s. Fig. 5, Pfeile). Das Fluid strömt somit vom Einlass 23 zum zweiten Spiegel 13, zum Schutzglas 15 entlang der ersten Ausnehmung 32 zur zweiten Ausnehmung 34 entlang der Aussparung 36 zum zweiten Auslass 37 und wird am zweiten Auslass 37 abgesaugt. Somit werden Verschmutzungen aus dem Strömungskanal 38 durch die Strömung im Strömungskanal 38 entfernt.

Zum Beispiel aktiviert die Kontrolleinheit die Lichtquelle 10 sobald die Strömung im Strömungskanal 38 ausgebildet ist. Beispielsweise wird das Werkstück 25 durch die Lichtstrahlen der Lichtquellte 10 erwärmt, wobei ein Teil der Lichtstrahlen, insbesondere wenn die Oberfläche noch nicht erwärmt ist, am Werkstück 25 reflektiert werden. Die reflektierte Lichtstrahlung gelangt entlang der zweiten Ausnehmung 34 zur Strahlenfallen 14 oder Strahlensumpf. Dadurch ist ein Strahlenschutz ohne zusätzliche Strahlenschutzkabine gewährleistet.

Beispielsweise wird die Temperatur am Werkstück durch das Pyrometer 24 gemessen (s. Fig. 6). Das Pyrometer 24 ist am Niederhalter 6 angeordnet, wobei eine Bohrung 39 am Niederhalter 6 ausgebildet ist. Zum Beispiel ist die Bohrung 39 relativ zur ersten Ausnehmung 32 um 90° um die Bewegungsachse 35 gedreht am Niederhalter 6 vorhanden. Hierdurch kann eine Wärmestrahlung des Werkstücks über die Bohrung 39 das Pyrometer 24 erreichen, womit eine Temperatur des Werkstücks 25, insbesondere eine Temperatur des Werkstücks 25 an der Fügestelle des Werkstücks ermittelt werden kann. Beispielsweise übermittelt das Pyrometer 24 die gemessene Temperatur an die Kontrolleinheit 40, wobei in der Kontrolleinheit 40 die zu erreichende Temperatur gespeichert ist und mit dem Messwert verglichen wird. Die Kontrolleinheit hat beispielsweise zu erreichende Temperaturen für unterschiedliche Materialien gespeichert. Beispielsweise wird, wenn die zu erreichende Temperatur vor einer bestimmten Zeitdauer errreicht wird, die Lichtquelle 10 deaktiviert. Kann die zu erreichende Temperatur nicht in der bestimmten Zeitdauer erreicht werden, wird der Fügevorgang erst einmal abgebrochen.

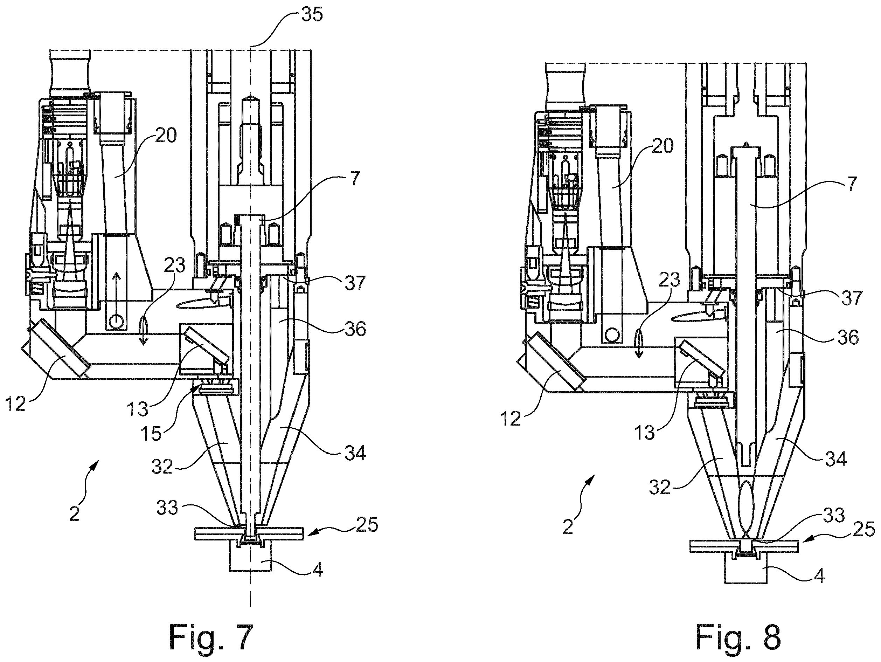

Beispielsweise wird insbesondere unmittelbar vor dem Ausschalten der Lichtquelle 10 oder zeitgleich mit dem Ausschalten der Lichtquelle 10 eine Bewegung des bewegbaren Werkzeugs 7 in Richtung Werkzeuggegenelement 4 gestartet, sodass das Werkstück 25 an der Fügestelle gefügt wird (Figur 7). Beispielsweise ist die Kontrolleinheit 40 dazu ausgebildet, zu Prüfen, ob die Lichtquelle 10 und damit eine Beleuchtung des Werkstücks 25 ausgeschaltet ist, wenn das bewegbare Werkzeug 7 einen Bereich des Strahlungswegs der Lichtstrahlen der Lichtquelle 10 auf seinem Weg in Richtung Werkzeuggegenelement 4 erreicht.

Hierdurch soll verhindert werden, dass das bewegbare Werkzeug 7 durch Bestrahlung mit Lichtstrahlen der Lichtquelle 10 sich ungewollt erhitzt. Ebenfalls soll hierdurch eine Sicherheit eines Mitarbeiters an der Fügewerkzeugeinheit 2 gewährleistet werden. Vorstellbar ist jedoch auch, dass die Kontrolleinheit zunächst prüft, ob die Lichtquelle 10 und damit eine Beleuchtung des Werkstücks 25 ausgeschaltet ist und erst nach der Überprüfung der ausgeschalteten Lichtquelle 10 eine Bewegung des bewegbare Werkzeugs 7 aktiviert.

Beispielsweise ist während der Herstellung der Fügeverbindung insbesondere dauerhaft eine Strömung im Strömungskanal 38 vorhanden, so dass Verschmutzungen, welche beim Herstellen der Fügeverbindung entstehen, abtransportiert werden können.

Beispielsweise wird das bewegbare Werkzeug 7 nach Beendigung des Fügevorgangs in eine Ausgangsposition gemäß Fig. 4 zurück bewegt. Zum Beispiel wird anschließend der zweite Auslass 37 geschlossen. Beispielsweise wird anschließend die Fügewerkzeugeinheit 2, insbesondere der Niederhalter 6 durch den Antrieb 8 vom Werkstück 25 wegbewegt. Beispielsweise strömt dauerhaft Fluid durch den Einlass 23 in Richtung Aussparung 33, damit die Optiken nicht verunreinigt werden, auch während der Stillstandzeit.

### Bezugszeichenliste

| | | | |
|---|---|---|---|
| 1 | Werkzeugzange | 22 | Steckplatz |
| 2 | Fügewerkzeugeinheit | 23 | Einlass |
| 3 | Werkzeugbügel | 24 | Pyrometer |
| 4 | Werkzeuggegenelement | 25 | Werkstück |
| 5 | Verbindungselement | 26 | Verstellelement |
| 6 | Niederhalter | 27 | Befestigungselement |
| 7 | Werkzeug | 28 | Sicherungssschalter |
| 8 | Antriebseinheit | 29 | Anbindungselement |
| 9 | Lichtleitungssystem | 30 | Befestigungsmittel |
| 10 | Lichtquelle | 31 | Kühlplatte |
| 11 | Kollimator | 32 | Ausnehmung |
| 12 | Spiegel | 33 | Aussparung |
| 13 | Spiegel | 34 | Ausnehmung |
| 14 | Strahlensumpf | 35 | Bewegungsachse |
| 15 | Schutzglas | 36 | Aussparung |
| 16 | Steckplatz | 37 | Auslass |
| 17 | Steckplatz | 38 | Strömungskanal |
| 18 | Steckplatz | 39 | Bohrung |
| 19 | Steckplatz | 40 | Kontrolleinheit |
| 20 | Absaugleitung | 41 | Bereich |
| 21 | Steckplatz | 42 | Werkstückoberfläche |

## Patentansprüche

1. Fügewerkzeugeinheit (2), wobei die Fügewerkzeugeinheit (2) einen Niederhalter (6), ein bewegbares Werkzeug (7), ein Werkzeuggegenelement (4), eine Antriebseinheit (8), eine Lichtquelle (10) und eine Kontrolleinheit (40) aufweist, wobei der Niederhalter (6) und das bewegbare Werkzeug (7) gegenüberliegend zum Werkzeuggegenelement (4) vorhanden sind, wobei durch die Antriebseinheit (8) der Niederhalter (6) in Richtung Werkzeuggegenelement (4) bewegbar ist, wobei die Fügewerkzeugeinheit (2) ausgebildet ist, ein an die Fügewerkzeugeinheit (2) angeordnetes Werkstück (25) durch eine Bewegung des bewegbaren Werkzeugs (7) relativ zum Werkzeuggegenelement (4) zu fügen, wobei die Kontrolleinheit (40) dazu ausgebildet ist, die Antriebseinheit (8) zu steuern und/oder zu regeln, wobei die Kontrolleinheit (40) dazu ausgebildet ist, die Lichtquelle (10) zu steuern und/oder zu regeln, wobei die Fügewerkzeugeinheit (2) ausgebildet ist, den Niederhalter (6) bis zu einer Position in Richtung Werkzeuggegenelement (4) zu bewegen, an welcher der Niederhalter (6) und das Werkzeuggegenelement (4) das an die Fügewerkzeugeinheit (2) angeordnete Werkstück (25) berühren, wobei die Fügewerkzeugeinheit (2) ausgebildet ist, eine Bestrahlung oder Beleuchtung einer Fügestelle des Werkstücks (25) mit dem Licht der Lichtquelle (10) zu beginnen, wenn der Niederhalter (6) die Position erreicht hat, dadurch gegengezeichnet, dass der Niederhalter (6) ein Lichtleitungssystem (9) aufweist, wobei der Niederhalter (6) eine Strahlenfalle oder einen Strahlensumpf umfasst, in welchem das reflektierte Licht eingefangen und absorbiert wird.

2. Fügewerkzeugeinheit (2) nach dem vorangegangenen Anspruch 2, **dadurch gekennzeichnet, dass** das Lichtleitungssystem (9) derart am Niederhalter (6) vorhanden ist, dass ein Lichtstrahl des Lichts der Lichtquelle (10) ausschließlich in einem Winkel größer 0° zu einer Bewegungsachse (35) des bewegbaren Werkzeugs (7) auf die Fügestelle des Werkstücks (25) einstrahlt.

3. Fügewerkzeugeinheit (2) nach einem der vorangegangenen Ansprüche, **dadurch gekennzeichnet, dass** der Niederhalter (6) durch die Antriebseinheit (8) in Richtung des Werkzeuggegenelements (4) bewegbar ist.

4. Fügewerkzeugeinheit (2) nach einem der vorangegangenen Ansprüche, **dadurch gekennzeichnet, dass** die Kontrolleinheit (40) der Fügewerkzeugeinheit (2) dazu ausgebildet ist, zeitgleich mit dem Start der Bewegung des bewegbaren Werkzeugs (7) oder zeitlich nach dem Start der Bewegung des bewegbaren Werkzeugs (7) eine Bestrahlung oder eine Beleuchtung der Fügestelle des angeordneten Werkstücks (25) mit dem Licht der Lichtquelle (10) zu beenden.

5. Fügewerkzeugeinheit (2) nach einem der vorangegangenen Ansprüche, **dadurch gekennzeichnet, dass** die Fügewerkzeugeinheit (2) dazu ausgebildet ist, in einem ersten Schritt den Niederhalter (6) bis zu einer Position in Richtung Werkzeuggegenelement (4) zu bewegen, in einem zweiten Schritt eine Beleuchtung oder eine Bestrahlung der Fügestelle durch die Lichtquelle (10) zu starten, in einem dritten Schritt die Bewegung des bewegbaren Werkzeugs (7) zu starten, in einem vierten Schritt die Beleuchtung oder die Bestrahlung zu beenden und in einem fünften Schritt den Niederhalter (6) aus der Position relativ zum Werkzeuggegenelement (4) weg zu bewegen.

6. Fügewerkzeugeinheit (2) nach einem der vorangegangenen Ansprüche, **dadurch gekennzeichnet, dass** der Niederhalter (6) derart ausgebildet ist, dass im angeordneten Zustand eines Werkstücks (25) an der Fügewerkzeugeinheit (2) der Niederhalter (6) in der Position derart an der Oberfläche (42) des Werkstücks (25) anstehend angeordnet ist, dass der Niederhalter (6) die Fügestelle des Werkstücks (25) umschließt, sodass maximal 20% der Strahlungsleistung des Lichts zwischen Niederhalter (6) und Oberfläche des Werkstücks (25) nach außen abstrahlt.

7. Werkzeugzange (1) mit einer Fügewerkzeugeinheit (2) nach einem der vorangegangenen Ansprüche und mit einem Werkzeugbügel (3).

8. Fügevorgang eines Werkstücks (25) durch eine Fügewerkzeugeinheit (2) nach einem der vorangegangenen Ansprüche 1 bis 6, mit den nacheinander folgenden Verfahrensschritten:
- Anordnen eines zu bearbeitenden Werkstücks (25) an die Fügewerkzeugeinheit (2).
- Bewegen eines Niederhalters (6) der Fügewerkzeugeinheit (2) relativ zu einem Werkzeuggegenelement (4) der Fügewerkzeugeinheit (2) bis zu einer Position, an welcher der Niederhalter (6) und das Werkzeuggegenelement (4) das Werkstück (25) berühren
- Halten des Niederhalters (6) an der Position
- Starten einer Bestrahlung oder einer Beleuchtung einer Fügestelle des Werkstücks (25) mit einem Licht einer Lichtquelle (10) der Fügewerkzeugeinheit (2), wenn der Niederhalter (6) die Position erreicht hat
- Einfangen und Absorbieren des reflektierten Lichts der Lichtquelle (10) der Fügewerkzeugeinheit (2) mittels einer Strahlenfalle oder eines Strahlensumpfs des Niederhalters (6) der Fügewerkzeugeinheit (2).

9. Fügevorgang nach dem vorangegangenen Anspruch 8 mit folgenden weiteren Verfahrensschritten:
- Starten einer Bewegung eines bewegbaren Werkzeugs (7) der Fügewerkzeugeinheit (2) in Richtung der Fügestelle des Werkstücks (25), um das Werkstück (25) zu fügen.

10. Fügevorgang nach einem der vorangegangenen Ansprüche 8 oder 9 mit folgenden weiteren Verfahrensschritten:
- Beenden der Beleuchtung oder der Bestrahlung der Fügestelle des Werkstücks (25)
- Wegbewegen des Niederhalters (6) von der Position.

11. Fügevorgang nach einem der vorangegangenen Ansprüche 8 bis 10 mit folgenden weiteren Verfahrensschritten:
- Beenden der Beleuchtung oder der Bestrahlung der Fügestelle des Werkstücks (25) zeitgleich mit dem Start der Bewegung des bewegbaren Werkzeugs (7) der Fügewerkzeugeinheit (2) in Richtung der Fügestelle des Werkstücks (25) oder zeitlich nach dem Start der Bewegung des bewegbaren Werkzeugs (7) der Fügewerkzeugeinheit (2) in Richtung der Fügestelle des Werkstücks (25).

## Claims

1. Joining tool unit (2), wherein the joining tool unit (2) has a holding-down member (6), a movable tool (7), a tool counter-element (4), a drive unit (8), a light source (10) and a control unit (40), wherein the holding-down member (6) and the movable tool (7) are provided opposite the tool counter-element (4), wherein the holding-down member (6) can be moved in the direction of the tool counter-element (4) by the drive unit (8), wherein the joining tool unit (2) is configured to join a workpiece (25) arranged on the joining tool unit (2) by a movement of the movable tool (7) relative to the tool counter-element (4), wherein the control unit (40) is configured to exercise open-loop and/or closed-loop control over the drive unit (8), wherein the control unit (40) is configured to exercise open-loop and/or closed-loop control over the light source (10), wherein the joining tool unit (2) is configured to move the holding-down member (6) as far as a position in the direction of the tool counter-element (4) at which the holding-down member (6) and the tool counter-element (4) touch the workpiece (25) arranged on the joining tool unit (2), wherein the joining tool unit (2) is configured to begin irradiation or illumination of a joining point on the workpiece (25) using the light from the light source (10) when the holding-down member (6) has reached the position, **characterized in that** the holding-down member (6) has a light guiding system (9), wherein the holding-down member (6) comprises a beam trap or a beam dump in which the reflected light is captured and absorbed.

2. Joining tool unit (2) according to the preceding Claim 2, **characterized in that** the light guiding system (9) is provided at the holding-down member (6) in such a manner that a light beam of the light from the light source (10) irradiates the joining point on the workpiece (25) exclusively at an angle of greater than 0° relative to a movement axis (35) of the movable tool (7).

3. Joining tool unit (2) according to either of the preceding claims, **characterized in that** the holding-down member (6) can be moved in the direction of the tool counter-element (4) by the drive unit (8).

4. Joining tool unit (2) according to one of the preceding claims, **characterized in that** the control unit (40) of the joining tool unit (2) is configured to end irradiation or illumination of the joining point on the arranged workpiece (25) using the light from the light source (10) at the same time as the start of the movement of the movable tool (7) or chronologically after the start of the movement of the movable tool (7).

5. Joining tool unit (2) according to one of the preceding claims, **characterized in that** the joining tool unit (2) is configured to move the holding-down member (6) as far as a position in the direction of the tool counter-element (4) in a first step, to start illumination or irradiation of the joining point by means of the light source (10) in a second step, to start the movement of the movable tool (7) in a third step, to end the illumination or irradiation in a fourth step, and to move the holding-down member (6) away out of the position relative to the tool counter-element (4) in a fifth step.

6. Joining tool unit (2) according to one of the preceding claims, **characterized in that** the holding-down member (6) is configured in such a manner that, in the state in which a workpiece (25) is arranged on the joining tool unit (2), the holding-down member (6) is arranged in the position placed against the surface (42) of the workpiece (25) in such a manner that the holding-down member (6) encloses the joining point on the workpiece (25) so that a maximum of 20% of the radiation power of the light between the holding-down member (6) and surface of the workpiece (25) is emitted to the outside.

7. Tool gripper (1) having a joining tool unit (2) according to one of the preceding claims and having a tool bracket (3).

8. Operation for joining a workpiece (25) by means of a joining tool unit (2) according to one of preceding Claims 1 to 6, comprising the successive following method steps:
- arranging a workpiece (25) to be processed on the joining tool unit (2),
- moving a holding-down member (6) of the joining tool unit (2) relative to a tool counter-element (4) of the joining tool unit (2) as far as a position at which the holding-down member (6) and the tool counter-element (4) touch the workpiece (25)
- holding the holding-down member (6) at the position
- starting irradiation or illumination of a joining point on the workpiece (25) using light from a light source (10) of the joining tool unit (2) when the holding-down member (6) has reached the position
- capturing and absorbing the reflected light from the light source (10) of the joining tool unit (2) by means of a beam trap or a beam dump of the holding-down member (6) of the joining tool unit (2).

9. Joining operation according to preceding Claim 8, comprising the following further method steps:
- starting a movement of a movable tool (7) of the joining tool unit (2) in the direction of the joining point on the workpiece (25) in order to join the workpiece (25) .

10. Joining operation according to either of preceding Claims 8 and 9, comprising the following further method steps:
- ending the illumination or irradiation of the joining point on the workpiece (25)
- moving the holding-down member (6) away from the position.

11. Joining operation according to one of preceding Claims 8 to 10, comprising the following further method steps:
- ending the illumination or irradiation of the joining point on the workpiece (25) at the same time as the start of the movement of the movable tool (7) of the joining tool unit (2) in the direction of the joining point on the workpiece (25) or chronologically after the start of the movement of the movable tool (7) of the joining tool unit (2) in the direction of the joining point on the workpiece (25).

## Revendications

1. Unité (2) d'outil d'assemblage, l'unité (2) d'outil d'assemblage comportant un serre-flan (6), un outil mobile (7), un contre-élément d'outil (4), une unité d'entraînement (8), une source de lumière (10) et une unité de commande (40), le serre-flan (6) et l'outil mobile (7) étant présents à l'opposé du contre-élément d'outil (4), le serre-flan (6) pouvant être déplacé en direction du contre-élément d'outil (4) par l'unité d'entraînement (8), l'unité (2) d'outil d'assemblage étant réalisée pour assembler une pièce (25) disposée sur l'unité (2) d'outil d'assemblage par un déplacement de l'outil mobile (7) par rapport au contre-élément d'outil (4), l'unité de commande (40) étant réalisée pour commander et/ou réguler l'unité d'entraînement (8), l'unité de commande (40) étant réalisée pour commander et/ou réguler la source de lumière (10), l'unité (2) d'outil d'assemblage étant réalisée pour déplacer le serre-flan (6) jusqu'à une position en direction du contre-élément d'outil (4), sur laquelle le serre-flan (6) et le contre-élément d'outil (4) sont en contact avec la pièce (25) disposée sur l'unité d'outil d'assemblage (2), l'unité (2) d'outil d'assemblage étant réalisée pour démarrer une irradiation ou un éclairage d'un point d'assemblage de la pièce (25) avec la lumière de la source de lumière (10) lorsque le serre-flan (6) a atteint la position, **caractérisée en ce que** le serre-flan (6) comporte un système d'acheminement de lumière (9), le serre-flan (6) comprenant un piège de rayons ou un réservoir de rayons, dans lequel la lumière réfléchie est capturée et absorbée.

2. Unité (2) d'outil d'assemblage selon la revendication précédente 2, **caractérisée en ce que** le système d'acheminement de lumière (9) est présent sur le serre-flan (6) de telle manière qu'un rayon de lumière de la source de lumière (10) rayonne sur le point d'assemblage de la pièce (25) exclusivement à un angle supérieur à 0° par rapport à un axe de déplacement (35) de l'outil mobile (7).

3. Unité (2) d'outil d'assemblage selon l'une des revendications précédentes, **caractérisée en ce que** le serre-flan (6) peut être déplacé par l'unité d'entraînement (8) en direction du contre-élément d'outil (4).

4. Unité (2) d'outil d'assemblage selon l'une des revendications précédentes, **caractérisée en ce que** l'unité de commande (40) de l'unité (2) d'outil d'assemblage est réalisée pour arrêter une irradiation ou un éclairage du point d'assemblage de la pièce (25) disposé avec la lumière de la source de lumière (10) simultanément avec le démarrage du déplacement de l'outil mobile (7) ou chronologiquement après le démarrage du déplacement de l'outil mobile (7).

5. Unité (2) d'outil d'assemblage selon l'une des revendications précédentes, **caractérisée en ce que** l'unité (2) d'outil d'assemblage est réalisée pour déplacer, dans une première étape, le serre-flan (6) jusqu'à une position en direction du contre-élément d'outil (4), pour démarrer, dans une deuxième étape, un éclairage ou une irradiation du point d'assemblage par la source de lumière (10), pour démarrer, dans une troisième étape, le déplacement de l'outil mobile (7), pour arrêter, dans une quatrième étape, l'éclairage ou l'irradiation et pour éloigner, dans une cinquième étape, le serre-flan (6) de la position par rapport au contre-élément d'outil (4).

6. Unité (2) d'outil d'assemblage selon l'une des revendications précédentes, **caractérisée en ce que** le serre-flan (6) est réalisé de telle manière que, lorsqu'une pièce (25) est disposée sur l'unité (2) d'outil d'assemblage, le serre-flan (6) est disposé dans la position de manière à être supporté sur la surface (42) de la pièce (25) de telle manière que le serre-flan (6) entoure le point d'assemblage de la pièce (25) si bien que 20 % au maximum de la puissance de rayonnement de la lumière entre le serre-flan (6) et la surface de la pièce (25) est rayonnée vers l'extérieur.

7. Pince (1) pour outil avec une unité (2) d'outil d'assemblage selon l'une des revendications précédentes et avec un étrier d'outil (3).

8. Processus d'assemblage d'une pièce (25) par une unité (2) d'outil d'assemblage selon l'une des revendications précédentes 1 à 6, avec les étapes de procédé se suivant les unes les autres :
- disposition d'une pièce (25) à usiner sur l'unité (2) d'outil d'assemblage,
- déplacement d'un serre-flan (6) de l'unité (2) d'outil d'assemblage par rapport à un contre-élément d'outil (4) de l'unité (2) d'outil d'assemblage jusqu'à une position sur laquelle le serre-flan (6) et le contre-élément d'outil (4) sont en contact avec la pièce (25),
- maintien du serre-flan (6) sur la position,
- démarrage d'une irradiation ou d'un éclairage d'un point d'assemblage de la pièce (25) avec une lumière d'une source de lumière (10) de l'unité (2) d'outil d'assemblage lorsque le serre-flan (6) a atteint la position,
- capture et absorption de la lumière réfléchie de la source de lumière (10) de l'unité (2) d'outil d'assemblage au moyen d'un piège de rayons ou d'un réservoir de rayons du serre-flan (6) de l'unité (2) d'outil d'assemblage.

9. Processus d'assemblage selon la revendication précédente 8, avec des étapes de procédé supplémentaires suivantes :
- démarrage d'un déplacement d'un outil mobile (7) de l'unité (2) d'outil d'assemblage en direction du point d'assemblage de la pièce (25) pour assembler la pièce (25).

10. Processus d'assemblage selon l'une des revendications précédentes 8 ou 9, avec des étapes de procédé supplémentaires suivantes :
- arrêt de l'éclairage ou de l'irradiation du point d'assemblage de la pièce (25),
- éloignement du serre-flan (6) de la position.

11. Processus d'assemblage selon l'une des revendications précédentes 8 à 10, avec des étapes de procédé supplémentaires suivantes :
- arrêt de l'éclairage ou de l'irradiation du point d'assemblage de la pièce (25) simultanément avec le démarrage du déplacement de l'outil mobile (7) de l'unité (2) d'outil d'assemblage en direction du point d'assemblage de la pièce (25) ou chronologiquement après le démarrage du déplacement de l'outil mobile (7) de l'unité (2) d'outil d'assemblage en direction du point d'assemblage de la pièce (25).
